# EUROPÄISCHE PATENTSCHRIFT

(11) **EP 0 461 276 B1**
(45) Veröffentlichungstag und Bekanntmachung des Hinweises auf die Patenterteilung: **01.02.1995**
(21) Anmeldenummer: 90110963.7
(22) Anmeldetag: 09.06.1990
(51) Int. Cl.: B60R 21/20

(54) **Gehäuse für Gassack-Auffang-Schutzeinrichtungen von Kraftfahrzeugen**
Housing for air bag restraint safety devices in motor vehicles
Dispositif de sécurité de retenue par sac à air dans des véhicules automobiles

(43) Veröffentlichungstag der Anmeldung: 18.12.1991
(73) Patentinhaber: Petri AG, D-63704 Aschaffenburg (DE)
(72) Erfinder: Zeller, Gregor, D-8750 Aschaffenburg (DE); Randelzhofer, Konrad, D-8750 Aschaffenburg (DE)
(74) Vertreter: Eyer, Eckhardt Philipp, Dipl.-Ing.

(56) Entgegenhaltungen:
- EP-A- 0 284 123
- DE-A- 3 811 373
- DE-U- 8 713 154

## Beschreibung

Die Erfindung geht aus von einem Gehäuse für Gassack-Auffang-Schutzeinrichtungen gemäß dem Oberbegriff des Patentanspruches 1.

Bei den bekannten Gehäusen der beschriebenen Art sind die Abdeckkappen mit einer Verstärkungseinlage aus einem textilen Netzgewebe versehen, wobei Zuschnitte angefertigt und zur Bildung klappenartiger Deckelflächen an ein geschlossenes, die seitlichen Begrenzungswände der Kappe bildendes Band genäht werden, das den Verstärkungsrahmen der Einlage bildet. Zur Herstellung der fertigen Abdeckung wird die in dieser Weise vorbereitete Verstärkungseinlage in eine Form eingelegt, die frei auskragenden Klappenteile mittels Stiften in einer mittleren Ebene der Ummantelungsform stabilisiert und anschließend - nach Schließen der Form - die Einlage mit Kunststoff ummantelt. Die Herstellung der bekannten Abdeckkappen ist außerordentlich aufwendig und führt zu einer ungewöhnlich hohen Ausschußquote. Dies hat seine Ursache insbesondere darin, daß zur Herstellung der Verstärkungseinlage eine Vielzahl von Produktionsschritten - Zuschnitt der Netzgewebeteile und des Bandes, Vernähen des Bandes zu dem geschlossenen Verstärkungsrahmen sowie Annähen der Netzgewebeteile - erforderlich ist. Darüberhinaus bereitet die genaue Positionierung der einerseits flexiblen, andererseits jedoch auch in weiten Grenzen federnd-steifen Verstärkungseinlage in der Mittelebene der Form und deren Halterung in dieser Lage während des gesamten Spritzvorganges erhebliche Schwierigkeiten unter Berücksichtigung des Umstandes, daß es sich bei der Abdeckkappe im Kraftfahrzeug um ein Sichtteil handelt, d.h. keinerlei Markierungen der Verstärkungseinlage an der Oberfläche sichtbar werden dürfen, andererseits jedoch auch aus technischen Gründen und Kostengründen die Ummantelung bestimmte vorgegebene Dicken nicht überschreiten darf. Die Einhaltung dieser Bedingungen im Betrieb kann nicht mit ausreichender Sicherheit gewährleistet werden, so daß bei der Herstellung der Abdeckkappen mit einer hohen Ausschußquote gerechnet werden muß. Ein weiterer wesentlicher Nachteil der bekannten Gehäuse für diesen Zweck ist auch darin zu sehen, daß der Zugriff von Unbefugten zu den Funktionsteilen der Gassack-Auffang-Schutzeinrichtung nicht mit ausreichender Sicherheit verhindert oder zumindest ausreichend sicher dokumentiert werden kann. Dies hat seine Ursache darin, daß eine das ungefugte Lösen ausschließende Verbindung zwischen der Abdeckkappe und dem Generatorträger bezw. dem daran angebrachten Sicherungsblech sowohl aus materialtechnischen als auch aus konstruktiven Gründen nicht geschaffen werden kann. Die Abdeckkappe ist daher bei den bekannten Einrichtungen dieser Art lediglich mittels einer Nut-Feder-Verbindung auf den Generatorträger aufgeklipst und durch einfache, unmittelbar zugängliche und lösbare Verschraubung gegen das nach oben in das Innere der Kappe einragende Sicherungsblech gesichert.

Es ist weiterhin aus der DE-U 87 13 154 eine Abdeckung für Gassack-Auffang-Schutzeinrichtingen bekannt geworden, die aus einer den Generatorträger umfassenden, eine Sollbruchlinie aufweisenden Abdeckkappe besteht, die mit einer aus zwei Teilen bestehenden metallischen Verstärkungseinlage versehen ist, deren Teile sich auf den beiden einander gegenüberliegenden Längskanten der Abdeckkappe bis in deren Deckelfläche erstrecken. Die bekannte Verstärkungseinlage weist somit im wesentlichen dieselben Nachteile wie die vorstehend beschriebene Verstärkung auf.

Der vorliegenden Erfindung liegt als Aufgabe die Schaffung eines Gehäuses für den genannten Zweck zugrunde, das kostengünstig unter ausreichend sicher reproduzierbaren Bedingungen herstellbar ist, so daß sich der Ausschuß auf ein Minimum reduziert. Die Aufgabe wird mit einem Gehäuse mit den im Patentanspruch 1 wiedergegebenen Merkmalen gelöst.

Durch die Erfindung ist ein Gehäuse geschaffen, bei dem die Verstärkungs-Einlage für die Abdeckkappe in absoluter Formstabilität hergestellt werden kann ohne Beeinträchtigung der an die Gassack-Auffang-Schutzeinrichtung in funktioneller Hinsicht zu stellenden Anforderungen, nämlich hohe Reißfestigkeit bei gleichzeitig hoher Flexibilität im Moment der höchsten dynamischen Belastung. Hierbei ist die Einlage mit geringsten Toleranzen durch Stanzen herstellbar und weist absolute Formstabilität auf, so daß im Vergleich zu den bekannten Gehäusen die Herstellung der Verstärkungseinlage sowie deren Einbringung in die Ummantelungsform sehr vereinfacht ist. Hinzu kommt, daß auch Lageveränderungen der Verstärkungseinlage in der Ummantelungsform unter dem Druck des in die Form einschießenden Materials, wie sie bei der Herstellung der Abdeckkappen für die bekannten Einrichtungen unvermeidbar sind, absolut ausgeschlossen werden können.

Weitere Ausführungsformen und Vorteile ergeben sich aus der nachfolgenden Beschreibung, in der die Erfindung anhand der beiliegenden Zeichnung beispielsweise erläutert ist. Es zeigen
- Fig. 1: eine Sicht auf eine Gassack-Aufprall-Schutzeinrichtung mit halbseitig entfernter Ummantelung
- Fig. 2: einen Schnitt Nach B - B durch die in Fig. 1 wiedergegebene Gassack-Aufprall-Schutzeinrichtung
- Fig. 3: einen Schnitt nach A - A durch Fig. 1
- Fig. 4: einen der Fig. 2 entsprechenden Schnitt durch eine andere Ausführungsform einer Gassack-Aufprall-Schutzeinrichtung
- Fig. 5: eine der Fig. 1 ensprechende Sicht auf eine andere Ausführungsform einer Gassack-Aufprall-Schutzeinrichtung
- Fig. 6: einen Schnitt nach C - C durch Fig. 5
- Fig. 7: einen der Fig. 6 entsprechenden Schnitt durch eine andere Ausführungsform einer Gassack-Aufprall-Schutzeinrichtung

Die in der Zeichnung wiedergegebene Gassack-Auffang-Schutzeinrichtung für Kraftfahrzeuge besteht aus einem topfartigen, der Aufnahme des Gassackes 1 und der Halterung des Gasgenerators dienenden Generatorträger 2, einer den Generatorträger 2 umfassenden, eine Sollbruchlinie aufweisenden Abdeckkappe 3, die mit einer im Bereich der Sollbruchlinie unterbrochenen Verstärkungseinlage 4 versehen ist, sowie einem der Sicherung der Abdeckkape 3 gegen mißbräuchliche Entfernung dienenden Sicherungsblech 5. Die einen im wesentlichen rechteckigen Verstärkungsrahmen 8 aufweisende Verstärkungseinlage für die Abdeckkappe ist aus einem formstabilen Material mit hohem Elastizitätsmodul hergestellt und derart mit gleichzeitig die Sollbruchlinien bildenden Freischnitten 9, 10 versehen, daß zwei lediglich entlang einer im wesentlichen linearen Verbindungslinie 11 mit der Umfangswand 8 verbundene klappenartige Deckelflächen 12, 13 gebildet sind. Die Freischnitte besitzen im wesentlichen T-Form mit einem sich zwischen den Klappen erstreckenden Mittelschnitt 9 und jeweils einem sich zwischen den Seitenkanten der Klappen und dem Verstärkungsrahmen erstreckenden Seitenschnitt 10.

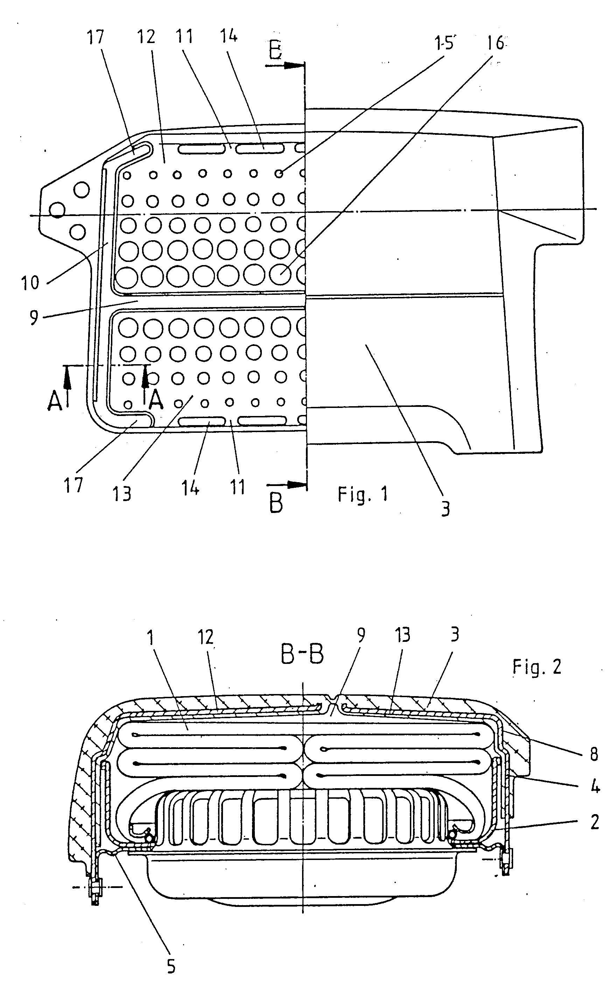

Es ist in der in Fig. 1 wiedergegebenen Ausführungsform die Verstärkungseinlage entlang den Verbindungslinien 11 zwischen den klappenartigen Deckelflächen 12, 13 und dem Verstärkungsrahmen 8 sowie auf den Umfangs- und Deckelflächen 8, 12, 13 mit Durchbrechungen 14, 15, 16 versehen, von denen die entlang der Verbindungslinie 11 vorgesehenen Durchbrechungen 14 die Form von Schlitzen bezw. Langlöchern aufweisen, während in den Deckelflächen 12, 13 eine Vielzahl von im Beispielsfalle reihenweise regelmäßig angeordnete Rundlöcher 15, 16 vorgesehen sind, - die in Richtung auf den sich zwischen den Deckelflächen erstreckenden Freischnitt 9 einen zunehmenden Gesamtquerschnitt aufweisen. In diesem Sinne weisen die Löcher 15 einen kleineren Querschnitt als die Löcher 16 auf.

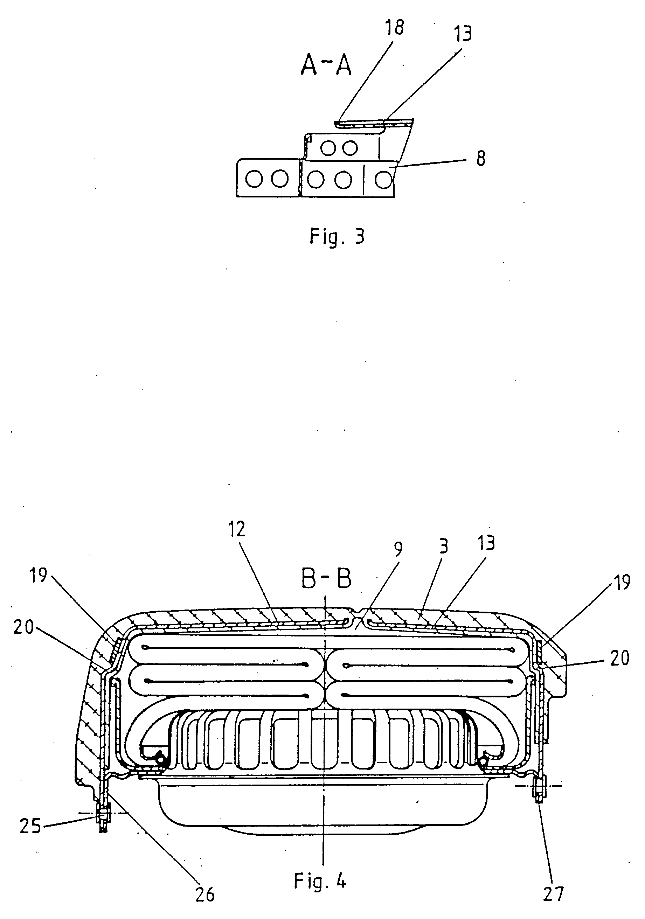

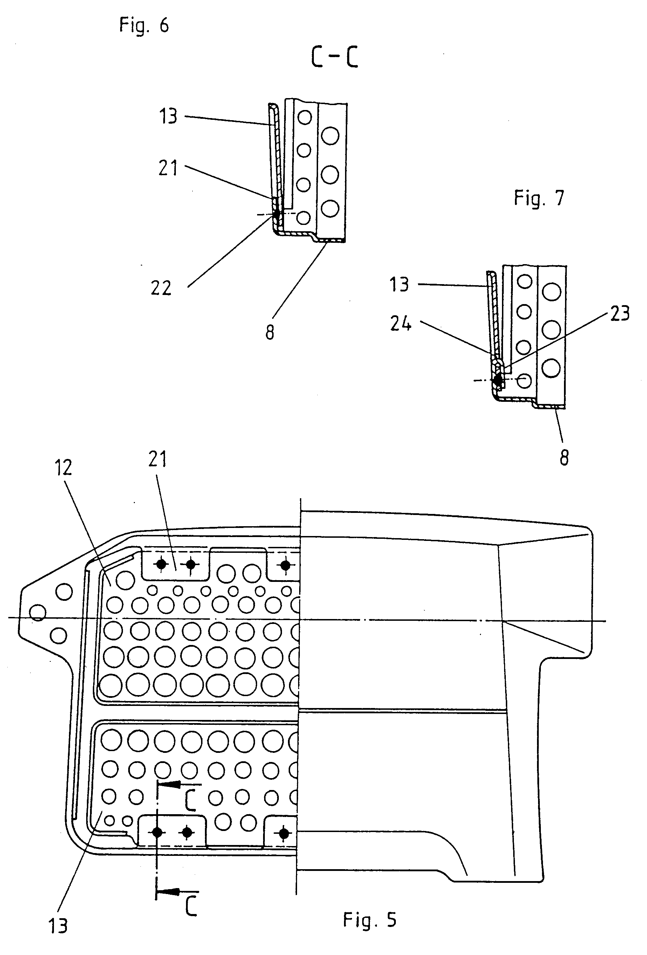

Die Verstärkungseinlage ist weiterhin mit als Einreißsperre dienenden Freischnitten 17 versehen, die sich ausgehend von den Enden der seitlichen Freischnitte 10 in Richtung auf die Verbindungslinie 11 zwischen den Deckelklappen 12, 13 und dem Verstärkungsrahmen 8 erstrecken. Es wird mit Hilfe dieser Freischnitte die hohe im Funktionsfall auftretende Reißkraft weich in den Verstärkungsrahmen abgeleitet und somit ein Einreißen oder gar Abreißen der Deckelklappen verhindert. Aus Fig. 3 der Zeichnung ist weiterhin erkennbar, daß die klappenartige Deckelfläche 12 zu ihrer Versteifung an ihrem freien Rand zu dem Freischnitt mit einem Bördelrand 18 versehen ist. Mit entsprechenden Bördelrändern kann ebenalls die Umfassungswand versehen sein. Es besteht darüberhinaus die Möglichkeit, zur weiteren Verstärkung der Einlage ein Verstärkungsband 19 mit hoher Festigkeit und Dehnung auf dem Höhenanschlag 20 - siehe Fig. 4 - anzubringen.

Im Falle der in den Fig. 1 bis 4 wiedergegebenen Ausführungsformen ist die Verstärkungseinlage aus einem Stück hergestellt, wobei die Freischnitte 9, 10, 17 durch Ausstanzen eingebracht sind. Es können jedoch auch in der in den Fig. 5 bis 7 wiedergegebenen Weise der Verstärkungsrahmen und die klappenartigen Deckelflächen 12, 13 aus jeweils für sich einzelnen Teilen hergestellt sein, wobei eines der Teile mit einer Verbindungslasche 21 versehen sein kann, mit deren Hilfe die Teile kraft-, form- oder materialschlüssig miteinander verbunden sind. Im Falle der in den Fig. 5 und 6 wiedergegebenen Ausführungsform ist eine Materialschluß-Verbindung durch Punktschweißung 22 der Deckelklappen 12, 13 gegen die Verbindungslaschen 21 wiedergegeben, die zu diesem Zweck vorteilhaft aus einem Material mit einer niedrigen Elastizitätsgrenze und hoher plastischer Verformbarkeit bestehen. Die Deckelklappen bestehen demgegenüber vorteilhaft aus einem hochflexiblen Material mit großer Rückstellkraft, beispielsweise Federstahl.

Fig. 7 zeigt demgegenüber eine Formschluß-Verbindung zwischen einer Deckelfläche und dem Verstärkungsrahmen, wobei an dem Verstärkungsrahmen 8 gekröpfte Zungen 23 angeordnet sind, die formschlüssig in entsprechend geformte Schlitze 24 der klappenartigen Deckelflächen 12, 13 eingreifen.

Es ist schließlich aus den Fig. 1, 2 und 4 deutlich erkennbar, daß die Funktionsteile, insbesondere der Gassack selbst, absolut sicher gegen unbefugten Zugriff gesichert sind. Es ist zu diesem Zweck das Sicherungsblech mit nach unten, d.h. entgegen der Ausrichtung des Generatorträgers 2 weisender Ausrichtung an dem Generatorträger 2 bzw. dem Generator angebracht, und die Verstärkungseinlage der Abdeckkappe derart verlängert, daß beide an ihren freien Enden flächig aneinander anliegen. Das sich überlappende Ende ist somit beidseitig zugänglich, so daß eine mit einfachem Werkzeug nicht lösbare Verbindung angebracht werden kann, d.h. die Teile gegeneinander verschweißt oder mittels Nieten 25 miteinander verbunden werden können.

## Patentansprüche

1. Gehäuse für Gassack-Auffang-Schutzeinrichtungen von Kraftfahrzeugen, bestehend aus einem topfartigen, der Aufnahme des Gassackes (1) dienenden Generatorträger (2), einer den Generatorträger (2) umfassenden, eine Sollbruchlinie aufweisenden Abdeckkappe (3), die mit einer im Bereich der Sollbruchlinie unterbrochenen, aus einem formstabilen Material mit hohem Elastizitätsmodul bestehenden Verstärkungseinlage (4) versehen ist, sowie einem der Sicherung der Abdeckkappe (3) gegen mißbräuchliche Entfernung dienenden Sicherungsblech (5), dadurch gekennzeichnet, daß die einen im wesentlichen rechteckigen, sich um den Umfang der Abdeckkappe erstreckenden Verstärkungsrahmen (8) aufweisende Verstärkungseinlage aus einem Stück hergestellt und derart mit gleichzeitig die Sollbruchlinien bildenden Freischnitten (9, 10) versehen ist, daß zwei lediglich entlang einer im wesentlichen linearen Verbindungslinie (11) mit der Umfangswand (8) verbundene klappenartige Deckelflächen (12, 13) gebildet sind.

2. Gehäuse für Gassack-Auffang-Schutzeinrichtungen nach Anspruch 1, dadurch gekennzeichnet, daß die Freischnitte im wesentlichen T-Form besitzen mit einem sich zwischen den Klappen erstreckenden Mittelschnitt (9) und jeweils einem sich zwischen den Seitenkanten der Klappen und der Umfangsfläche erstreckenden Seitenschnitt (10).

3. Gehäuse für Gassack-Auffang-Schutzeinrichtungen nach Anspruch 1 oder 2, dadurch gekennzeichnet, daß die Verstärkungseinlage entlang den Verbindungslinien (11) zwischen den klappenartigen Deckelflächen (12, 13) und dem Verstärkungsrahmen (8) sowie auf den Umfangs- und Deckelflächen (8, 12, 13) mit Durchbrechungen (14, 15, 16) versehen ist.

4. Gehäuse für Gassack-Auffang-Schutzeinrichtungen nach Anspruch 3, dadurch gekennzeichnet, daß die entlang der Verbindungslinie (11) vorgesehenen Durchbrechungen (14) die Form von Schlitzen bezw. Langlöchern aufweisen.

5. Gehäuse für Gassack-Auffang-Schutzeinrichtungen nach Anspruch 3, dadurch gekennzeichnet, daß in den Deckelflächen (12, 13) eine Vielzahl von unregelmäßig oder reihenweise regelmäßig angeordnete Durchbrechungen (15, 16) vorgesehen sind, die in Richtung auf den sich zwischen den Deckelflächen erstreckenden Freischnitt (9) einen zunehmenden Gesamtquerschnitt aufweisen.

6. Gehäuse für Gassack-Auffang-Schutzeinrichtungen nach einem oder mehreren der Ansprüche 1 bis 5, dadurch gekennzeichnet, daß die Verstärkungseinlage mit als Einreißsperre dienenden Freischnitten (17) versehen sind, die sich ausgehend von den Enden der seitlichen Freischnitte (10) in Richtung auf die Verbindungslinie (11) zwischen den Deckelklappen (12, 13) und dem Verstärkungsrahmen (8) erstrecken.

7. Gehäuse für Gassack-Auffang-Schutzeinrichtungen nach einem oder mehreren der Ansprüche 1 bis 6, dadurch gekennzeichnet, daß die klappenartigen Deckelflächen (12, 13) und/oder der Verstärkungsrahmen (8) an ihren freien Rändern zu den Freischnitten (9, 10) mit einer Versteifung versehen sind.

8. Gehäuse für Gassack-Auffang-Schutzeinrichtungen nach Anspruch 7, dadurch gekennzeichnet, daß die klappenartigenm Deckelflächen und/oder der Verstärkungsrahmen an ihren freien Rändern zu den Freischnitten (9, 10) mit einem Bördelrand (18) versehen sind.

9. Gehäuse für Gassack-Auffang-Schutzeinrichtungen nach einem oder mehreren der Ansprüche 1 bis 8, dadurch gekennzeichnet, daß der Verstärkungsrahmen mit einem Verstärkungsband (19) versehen ist.

10. Gehäuse für Gassack-Auffang-Schutzeinrichtungen nach einem oder mehreren der Ansprüche 1 bis 9, dadurch gekennzeichnet, daß die Freischnitte (9, 10, 17) durch Ausstanzen eingebracht sind.

11. Gehäuse für Gassack-Auffang-Schutzeinrichtungen nach Anspruch 10, dadurch gekennzeichnet, daß der Verstärkungsrahmen und die klappenartigen Deckelflächen (12, 13) mehrteilig mit einem Verbindungslappen hergestellt und kraft-, form- oder materialschlüssig miteinander verbunden sind.

12. Gehäuse für Gassack-Auffang-Schutzeinrichtungen nach Anspruch 10, dadurch gekennzeichnet, daß der Verstärkungsrahmen (8) und die klappenartigen Deckelflächen (12, 13) aus unterschiedlichem Material bestehen derart, daß die klappenartigen Deckelflächen (12, 13) aus einem hochflexiblen Material mit großer Rückstellkraft, beispielsweise Federstahl bestehen und mittels jeweils einer Scharnierwirkung aufweisenden Verbindungslasche (21) mit der Umfangswand (8) verbunden sind.

13. Gehäuse für Gassack-Auffang-Schutzeinrichtungen nach Anspruch 11, dadurch gekennzeichnet, daß zur Herstellung einer scharnierartigen Formschlußverbindung an dem Verstärkungsrahmen gekröpfte Zungen (23) angeordnet sind, die formschlüssig in entsprechend geformte Schlitze (24) der klappenartigen Deckelflächen (12, 13) eingreifen.

14. Gehäuse für Gassack-Auffang-Schutzeinrichtungen nach einem oder mehreren der Ansprüche 1 bis 13, dadurch gekennzeichnet, daß das Sicherungsblech (5) an dem Generatorträger (2) befestigt und mit mindestens einem sich derart parallel zum Umfangsblech (8) der Abdeckkappe erstreckenden Schenkel (26) versehen ist, daß die Abdeckkappe und der Schenkel (26) zur Herstellung einer unlösbaren Verbindung (27) flächig aneinander anliegen.

## Claims

1. Housing for shock absorbing airbag safety systems of automotive vehicles, comprising a cup-shaped generator carrier (2) which serves to accommodate the airbag (1), a cover cap (3) which surrounds the generator carrier (2) and has an intended breaking line, said cap being provided with a reinforcing insert (4), which is interrupted in the region of the intended breaking line and is formed from a rigid material having a high modulus of elasticity, and a securing plate (5), which serves to prevent unauthorised removal of the cover cap (3), characterised in that the reinforcing insert, which has a substantially rectangular reinforcing frame (8) extending around the periphery of the cover cap, is formed from one piece and is provided with open cuts (9, 10), which simultaneously form the intended breaking lines, in such a manner that two flap-like cover faces (12, 13) are formed, which are connected to the peripheral wall (8) only along a substantially linear connection line (11).

2. Housing for shock absorbing airbag safety systems according to claim 1, characterised in that the open cuts have a substantially T-shaped configuration, with a central cut (9) extending between the flaps and a lateral cut (10) extending between the lateral edges of the flaps and the peripheral area.

3. Housing for shock absorbing airbag safety systems according to claim 1 or 2, characterised in that the reinforcing insert is provided wth openings (14, 15, 16) along the connection lines (11) between the flap-like cover faces (12, 13) and the reinforcing frame (8) as well as on the peripheral and cover faces (8, 12, 13).

4. Housing for shock absorbing airbag safety systems according to claim 3, characterised in that the openings (14), which are provided along the connection line (11), have the configuration of slots or elongate holes.

5. Housing for shock absorbing airbag safety systems according to claim 3, characterised in that a plurality of openings (15, 16) are provided in the cover faces (12, 13), which openings are disposed irregularly or regularly in rows and have an increasing overall cross-section in the direction towards the open cut (9) extending between the cover faces.

6. Housing for shock absorbing airbag safety systems according to one or more of claims 1 to 5, characterised in that the reinforcing insert is provided with open cuts (17), which serve as a tear resistant means and extend from the ends of the lateral open cuts (10) in the direction towards the connection line (11) between the cover flaps (12, 13) and the reinforcing frame (8).

7. Housing for shock absorbing airbag safety systems according to one or more of claims 1 to 6, characterised in that the flap-like cover faces (12, 13) and/or the reinforcing frame (8) are provided with a reinforcement on their free edges adjacent to the open cuts (9, 10).

8. Housing for shock absorbing airbag safety systems according to claim 7, characterised in that the flap-like cover faces and/or the reinforcing frame are provided with a flanged edge (18) at their free edges extending to the open cuts (9, 10).

9. Housing for shock absorbing airbag safety systems according to one or more of claims 1 to 8, characterised in that the reinforcing frame is provided with a reinforcing strip (19).

10. Housing for shock absorbing airbag safety systems according to one or more of claims 1 to 9, characterised in that the open cuts (9, 10, 17) are produced by punching.

11. Housing for shock absorbing airbag safety systems according to claim 10, characterised in that the reinforcing frame and the flap-like cover faces (12, 13) are produced as multi-part assemblies having a connection tab and are interconnected in a force-, form- or material-locking manner.

12. Housing for shock absorbing airbag safety systems according to claim 10, characterised in that the reinforcing frame (8) and the flap-like cover faces (12, 13) are formed from different materials such that the flap-like cover faces (12, 13) are formed from a highly flexible material having a considerable restoring force, for example spring steel, and are connected to the peripheral wall (8) by means of a connection lug (21), which has a hinge action.

13. Housing for shock absorbing airbag safety systems according to claim 11, characterised in that, in order to establish a hinge-like form-locking connection, bent projection members (23) are disposed on the reinforcing frame and engage in appropriately configured slots (24) in the flap-like cover faces (12, 13) in a form-locking manner.

14. Housing for shock absorbing airbag safety systems according to one or more of claims 1 to 13, characterised in that the securing plate (5) is mounted on the generator carrier (2) and is provided with at least one portion (26), which extends parallel to the peripheral plate (8) of the cover cap in such a manner that the cover cap and the leg (26) abut against each other in a surface-to-surface manner to establish a non-detachable connection (27).

## Revendications

1. Carter pour dispositifs de protection par amortissement par coussin gonflable dans des véhicules automobiles, se composant d'un porte-générateur (2) en forme de pot servant à recevoir le coussin gonflable (1), d'un capuchon (3) qui est emboîté sur le porte-générateur (2), présente une ligne destinée à la rupture et est muni d'un insert de renfort (4) qui est fait d'un matériau stable ayant un module d'élasticité élevé et qui est interrompu au niveau de la ligne destinée à la rupture, ainsi que d'une tôle de sécurité (5) qui sert à protéger la chape (3) contre un enlèvement abusif, caractérisé en ce que l'insert de renfort, qui comporte un cadre de renfort (8) essentiellement rectangulaire s'étendant tout autour de la périphérie du capuchon, est fabriqué d'une seule pièce et est muni d'entailles libres (9, 10) constituant en même temps les lignes destinées à la rupture, de telle manière qu'il soit formé deux surfaces de couvercle (12, 13) semblables à des volets, qui ne sont reliées à la paroi périphérique (8) que le long d'une ligne de jonction (11) essentiellement rectiligne.

2. Carter pour dispositifs de protection par amortissement par coussin gonflable selon la revendication 1, caractérisé en ce que les entailles libres ont essentiellement la forme d'un T, une entaille médiane (9) s'étendant entre les volets et deux entailles latérales (10) s'étendant chacune entre les bords latéraux des volets et la surface périphérique.

3. Carter pour dispositifs de protection par amortissement par coussin gonflable selon la revendication 1 ou 2, caractérisé en ce que l'insert de renfort est muni d'ouvertures (14, 15, 16) le long des lignes de jonction (11) entre les surfaces de couvercle semblables à des volets (12, 13) et le cadre de renfort (8), ainsi que dans les surfaces périphériques et les surfaces de couvercle (8, 12, 13).

4. Carter pour dispositifs de protection par amortissement par coussin gonflable selon la revendication 3, caractérisé en ce que les ouvertures (14) prévues le long de la ligne de jonction (11) présentent la forme de fentes ou de trous oblongs.

5. Carter pour dispositifs de protection par amortissement par coussin gonflable selon la revendication 3, caractérisé en ce qu'il est prévu, dans les surfaces de couvercle (12, 13), une multiplicité d'ouvertures (15, 16) disposées irrégulièrement ou régulièrement en rangées, qui présentent une section totale croissante en direction de l'entaille libre (9) qui s'étend entre les surfaces de couvercle.

6. Carter pour dispositifs de protection par amortissement par coussin gonflable selon l'une quelconque des revendications 1 à 5, caractérisé en ce que l'insert de renfort est muni d'entailles libres (17) qui servent d'arrêt de déchirure et qui s'étendent à partir des extrémités des entailles libres latérales (10) en direction de la ligne de jonction (11) entre les volets de couvercle (12, 13) et le cadre de renfort (8).

7. Carter pour dispositifs de protection par amortissement par coussin gonflable selon l'une quelconque des revendications 1 à 6, caractérisé en ce que les surfaces de couvercle semblables à des volets (12, 13) et/ou le cadre de renfort (8) sont munis d'un raidisseur sur leurs bords libres du côté des entailles libres (9, 10).

8. Carter pour dispositifs de protection par amortissement par coussin gonflable selon la revendication 7, caractérisé en ce que les surfaces de couvercle semblables à des volets et/ou le cadre de renfort sont munis d'un bord rabattu (18) au niveau de leurs bords libres du côté des entailles libres (9, 10).

9. Carter pour dispositifs de protection par amortissement par coussin gonflable selon l'une quelconque des revendications 1 à 8, caractérisé en ce que le cadre de renfort est muni d'une bande de renfort (19).

10. Carter pour dispositifs de protection par amortissement par coussin gonflable selon l'une quelconque des revendications 1 à 9, caractérisé en ce que les entailles libres (9, 10, 17) sont formées par découpage à la matrice.

11. Carter pour dispositifs de protection par amortissement par coussin gonflable selon la revendication 10, caractérisé en ce que le cadre de renfort et les surfaces de couvercle semblables à des volets (12, 13) sont fabriqués en plusieurs parties avec languette de jonction et sont reliés entre eux par adhérence, par ajustage ou par la matière.

12. Carter pour dispositifs de protection par amortissement par coussin gonflable selon la revendication 11, caractérisé en ce que le cadre de renfort (8) et les surfaces de couvercle semblables à des volets (12, 13) sont en des matériaux différents, les surfaces de couvercle semblables à des volets (12, 13) étant en un matériau très flexible ayant une grande force de rappel, par exemple en acier à ressort, et étant reliées chacune à la paroi périphérique (8) par une languette de jonction (21) qui produit un effet de charnière.

13. Carter pour dispositifs de protection par amortissement par coussin gonflable selon la revendication 11, caractérisé en ce que pour la formation d'une jonction par ajustage formant charnière, il est disposé, sur le cadre de renfor, des languettes contrecoudées (23) qui s'adaptent dans des fentes de forme correspondante (24) des surfaces de couvercle semblables à des volets (12, 13).

14. Carter pour dispositifs de protection par amortissement par coussin gonflable selon l'une quelconque des revendications 1 à 13, caractérisé en ce que la tôle de sécurité (5) est fixée au porte-générateur (2) et est munie d'au moins une aile (26) qui s'étend parallèlement à la tôle périphérique (8) du capuchon de telle manière que le capuchon et l'aile (26) soient appliqués l'un sur l'autre, surface contre surface, pour la formation d'une jonction indétachable (27).
